(19) Europäisches Patentamt
European Patent Office
Office européen des brevets

(11) EP 3 651 259 A1

(12) # EUROPEAN PATENT APPLICATION
published in accordance with Art. 153(4) EPC

(43) Date of publication:
**13.05.2020 Bulletin 2020/20**

(21) Application number: **17916937.0**

(22) Date of filing: **04.07.2017**

(51) Int Cl.:
***H01M 10/36*** *(2010.01)* ***H01M 4/60*** *(2006.01)*
***H01M 10/38*** *(2006.01)*

(86) International application number:
**PCT/JP2017/024542**

(87) International publication number:
**WO 2019/008681 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Optimizer Inc.**
**Tokyo 107-0051 (JP)**

(72) Inventor: **TAKAMURA Takatsugu**
**Saitama-shi**
**Saitama 331-0812 (JP)**

(74) Representative: **Vesterinen, Jussi Tapio**
**LUMI IP GmbH**
**Rodtmattstrasse 45**
**3014 Bern (CH)**

(54) **SECONDARY BATTERY AND MANUFACTURING METHOD OF SECONDARY BATTERY**

(57) A secondary battery includes a positive electrode having a structure in which a positive electrode complex film is laminated on a positive electrode current collector, a negative electrode having a structure in which a negative electrode complex film is laminated on a negative electrode current collector, a separator that separates the positive electrode and the negative electrode, and a package member that seals the positive electrode, the negative electrode, and the separator. In the positive electrode complex film, the average valence of the metal element increases as the secondary battery is charged, and decreases as the secondary battery is discharged. In the negative electrode complex film, the average valence of the metal element decreases as the secondary battery is charged, and increases as the secondary battery is discharged.

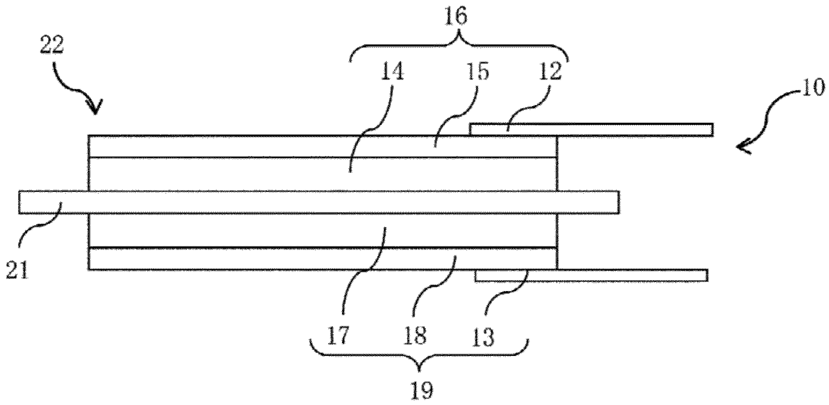


F I G. 2

EP 3 651 259 A1

## Description

### TECHNICAL FIELD

The present invention relates to a secondary battery and a method of manufacturing the same, and relates to a secondary battery using an organic metal complex as an electrode and a method of manufacturing the same.

### BACKGROUND ART

Conventionally, a lead-based battery, an alkali storage battery, an organic electrolyte battery, and a power battery are known as secondary batteries that can repetitively be used by charging. Examples of batteries that are manufactured, sold, and widely spread are a nickel-hydrogen battery as an alkali storage battery and a lithium-ion battery as an organic electrolyte battery. These secondary batteries are charged and discharged by using chemical reactions of the positive electrode and the negative electrode themselves.

Recently, as a large storage battery to be used for levelling of power demand fluctuations and equalization of natural energy power generation and as a backup power supply at the time of power failure, a redox flow battery is manufactured, researched, and developed (see, e.g., patent literature 1). In this redox flow battery, the positive electrode and the negative electrode themselves do not chemically react, and charging and discharging are performed by using changes in valences of the positive electrode active substance and the negative electrode active substance. For example, the redox flow battery has a structure in which a vanadium-based metal ion having a valence from divalent to pentavalent is used as the positive electrode active substance and the negative electrode active substance, and the active substances and an electrolyte are circulated by using a pump. Also, advantages of the redox flow battery are that the battery capacity can be increased by only additionally installing a tank for storing the active substances and the electrolyte, and the battery can be used for a long time period because the electrolyte remains almost unchanged.

### CITATION LIST

### PATENT LITERATURE

Patent literature 1: Japanese Patent Laid-Open No. 2007-305501

### SUMMARY OF THE INVENTION

### TECHNICAL PROBLEM

Unfortunately, the redox flow battery has the problem that the size of the battery itself is increased by the tank for storing the active substances and the electrolyte and the pump for circulating them, and this makes easy carrying of the battery difficult. In addition, although the electrolyte of the redox flow battery hardly changes, the electrolyte may deteriorate depending on the installation conditions of the battery. This sometimes makes it impossible to use the battery semi-permanently.

The present invention has been made in consideration of the above situation, and provides a secondary battery that is semi-permanently usable for leveling of power demand fluctuations and equalization of natural energy power generation and as a backup power supply at the time of power failure, and can easily be carried, and provide a method of manufacturing this secondary battery.

### SOLUTION TO PROBLEM

One example aspect of the present invention provides a secondary battery to be used by repeating charging and discharging, comprising: a positive electrode having a structure in which a positive electrode complex film, which is made of a positive electrode organic metal complex including a structure in which a metal element having a plurality of valences is bonded to an organic compound, is laminated on a positive electrode current collector; a negative electrode having a structure in which a negative electrode complex film, which is made of a negative electrode organic metal complex including a structure in which a metal element having a plurality of valences is bonded to an organic compound, is laminated on a negative electrode current collector; a separator that electrically separates the positive electrode and the negative electrode; and a package member that seals the positive electrode, the negative electrode, and the separator while partially exposing the positive electrode and the negative electrode, wherein in the positive electrode complex film, an average valence of the metal element increases as the secondary battery is charged, and decreases as the secondary battery is discharged, and in the negative electrode complex film, an average valence of the metal element decreases

as the secondary battery is charged, and increases as the secondary battery is discharged.

Another example aspect of the present invention provides a method of manufacturing a secondary battery to be used by repeating charging and discharging, comprising: preparing a positive electrode organic metal complex and a negative electrode organic metal complex each including a structure in which a metal element having a plurality of valences is bonded to an organic compound; laminating a positive electrode complex film made of the positive electrode organic metal complex on a positive electrode current collector, and laminating a negative electrode complex film made of the negative electrode organic metal complex on a negative electrode current collector; placing a separator between the positive electrode current collector on which the positive electrode complex film is laminated and the negative electrode current collector on which the negative electrode complex film is laminated, and performing heat pressure welding; and sealing the positive electrode current collector and the negative electrode current collector that are pressure-bonded via the separator, by using a package member, wherein in the preparing, the metal element is selected such that an average valence of the metal element in the positive electrode complex film increases as the secondary battery is charged, and decreases as the secondary battery is discharged, and the metal element is selected such that an average valence of the metal element in the negative electrode complex film decreases as the secondary battery is charged, and increases as the secondary battery is discharged.

## ADVANTAGEOUS EFFECTS OF INVENTION

According to the present invention, it is possible to provide a secondary battery that is semi-permanently usable for leveling of power demand fluctuations and equalization of natural energy power generation and as a backup power supply at the time of power failure, and can easily be carried, and provide a method of manufacturing this secondary battery.

## BRIEF DESCRIPTION OF DRAWINGS

Fig. 1 is a plan view of a secondary battery according to an example;
Fig. 2 is a view showing an outline of the internal arrangement of the secondary battery according to the example;
Fig. 3 is a schematic view showing a spherical capacitor made of metal atoms in each complex film;
Fig. 4 is an enlarged view of Fig. 3, and shows one metal atom;
Fig. 5 is a schematic view for explaining charging/discharging of the secondary battery according to the example;
Fig. 6 is a graph showing the energy state of the secondary battery according to the example;
Fig. 7 is a sequence showing processes of manufacturing a polymerized L-lactide derivative; and
Fig. 8 is a sequence showing processes of a method of manufacturing the secondary battery according to the example.

## DESCRIPTION OF EXAMPLE EMBODIMENTS

An example embodiment of a secondary battery according to the present invention will be explained in detail below with reference to the accompanying drawings based on an example. Note that the present invention is not limited to the contents to be explained below, and can be changed and carried out without departing from the spirit and scope of the invention. Note also that each of the drawings to be used to explain the example schematically shows the secondary battery of the present invention and its constituent members, and partially includes emphasis, enlargement, reduction, omission, or the like in order to deepen the understanding. Therefore, each drawing does not accurately represent the scale, the shape, and the like of each constituent member in some cases. Furthermore, various numerical values to be used in the example are examples, and can be changed variously as needed.

<Example>

The structure of a secondary battery 10 according to this example will be explained below with reference to Figs. 1 and 2. Fig. 1 is a plan view of the secondary battery 10 according to this example. Fig. 2 is a view showing an outline of the internal arrangement of the secondary battery 10 according to this example.

As shown in Fig. 1, the secondary battery 10 has a structure entirely covered with an insulating film 11 that functions as a package member, and a positive electrode lead line 12 and a negative electrode lead line 13 are extracted outside the secondary battery 10 from the insulating film 11. That is, in the secondary battery 10, a battery internal structure (to be described later) is sealed by the insulating film 11, and charging to the sealed battery internal structure and discharging from it are performed via the positive electrode lead line 12 and the negative electrode lead line 13.

Also, in the secondary battery 10 as shown in Fig. 2, a positive electrode 16 includes a positive electrode

complex film 14 as a positive electrode complex membrane, a positive electrode current collector 15, and the positive electrode lead line 12, and a negative electrode 19 includes a negative electrode complex film 17 as a negative electrode complex membrane, a negative electrode current collector 18, and the negative electrode lead line 13. More specifically, one positive electrode 16 is formed by laminating the materials in the order of the positive electrode complex film 14, the positive electrode current collector 15, and the positive electrode lead line 12. Likewise, one negative electrode 19 is formed by laminating the materials in the order of the negative electrode complex film 17, the negative electrode current collector 18, and the negative electrode lead line 13.

Furthermore, as shown in Fig. 2, the positive electrode 16 and the negative electrode 19 oppose each other via a separator 21. Note that the positive electrode 16, the negative electrode 19, and the separator 21 form a battery internal structure 22.

Accordingly, the secondary battery 10 according to this example includes the positive electrode 16, the negative electrode 19, the separator 21 for making the two electrodes oppose each other and electrically isolating them, and the insulating film 11 that covers most of these members and exposes only parts of the two lead lines. That is, the secondary battery 10 according to this example adopts a structure not including an electrolyte, and differs in structure and principle from conventionally known secondary batteries (a lead-based battery, an alkali storage battery, an organic electrolyte battery, and a redox flow battery) including an electrolyte. In addition, in the secondary battery 10 according to this example, the positive electrode complex film 14 and the negative electrode complex film 17 are used as active substances.

As the insulating film 11 of the secondary battery 10 according to this example, it is possible to use, e.g., a laminate film for use in general secondary batteries. That is, as the insulating film 11, it is possible to use a laminate film obtained by adhering a plurality of resin films such as polypropylene on an aluminum foil. Also, as the separator 21, it is possible to use, e.g., a cellulose acetate film having a thickness of about 15 μm. Note that it is also possible to use other arrangements and materials for use in general secondary batteries, as the arrangements and materials of the insulating film 11 and the separator 21.

As the positive electrode lead line 12 of the positive electrode 16 and the negative electrode lead line 13 of the negative electrode 19, it is possible to use, e.g., a thin film of a metal having a relatively high electrical conductivity such as copper or aluminum. In addition, copper or the like can be used as the positive electrode current collector 15 of the positive electrode 16, and aluminum or the like can be used as the negative electrode current collector 18 of the negative electrode 19. Note that the materials of the abovementioned constituent members of the positive electrode 16 and the negative electrode 19 are not limited to those described above, and can appropriately be changed in accordance with characteristics and specifications required for the secondary battery 10.

On the other hand, the positive electrode complex film 14 of the positive electrode 16 is made of a positive electrode organic metal complex including a structure in which a metal element having a plurality of valences is bonded to an organic compound. Similarly, the negative electrode complex film 17 of the negative electrode 19 is made of a negative electrode organic metal complex including a structure in which a metal element having a plurality of valences is bonded to an organic compound. In this example, as the positive electrode complex film 14 and the negative electrode complex film 17, a material (i.e., a polymerized L-lactide derivative) in which a transition metal atom is fixed to an organic polymer including a structure obtained by laminating cyclic polypeptide in the form of a disk is prepared, and the prepared material is processed into a film having a thickness of about 100 μm. Note that when explaining both the positive electrode organic metal complex and the negative electrode organic metal complex without distinguishing between them, they will also simply be described as organic metal complexes.

For example, the polymerized L-lactide derivative as the material of the positive electrode complex film 14 and the negative electrode complex film 17 has a structure including chemical formula (1) or (2) below as a constituent unit:

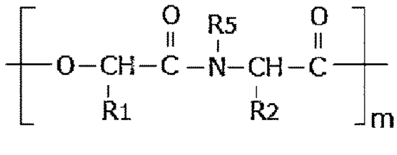 (1)

Note that in chemical formula (1), R1 and R2 are structures containing a metal element and can be the same or different. Note also that in chemical formula (1), R5 is a structure containing a metal element. Furthermore, m indicates the number of repetitions in chemical formula (1).

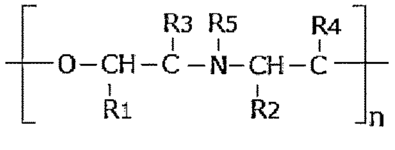 (2)

Note that in chemical formula (2), R1, R2, R3, and R4 are structures containing a metal element and can be the same or different. Note also that in chemical formula (2), R5 is a structure containing a metal element. Furthermore, n indicates the number of repetitions in chemical formula (2).

R1 to R5 in chemical formulas (1) and (2) above are preferably structures containing vanadium (symbol of element: V). This is so because vanadium is a transition metal having valences from divalent to pentavalent, has a potential determined by the oxidation number, and is a metal element favorable to make the secondary battery 10 function. Therefore, this example uses vanadium that is a transition metal as the material of the positive electrode complex film 14 and the negative electrode complex film 17. Especially in this example, the positive electrode complex film 14 of the positive electrode 16 is manufactured as a complex containing quadrivalent vanadium, and the negative electrode complex film 17 of the negative electrode 19 is manufactured as a complex containing trivalent vanadium.

Note that a metal element having a plurality of valences can be used as the metal material to be bonded to the organic polymer. For example, therefore, it is possible to use an element selected from the group consisting of nickel, iron, aluminum, titanium, cerium, silicon, zircon (zirconium), ruthenium, manganese, chromium, cobalt, platinum, thorium, palladium, and tin. As the metal material to be bonded to the organic polymer, it is also possible to use a plurality of elements selected from the group consisting of nickel, iron, aluminum, titanium, cerium, silicon, zircon (zirconium), ruthenium, manganese, chromium, cobalt, platinum, thorium, palladium, and tin. Furthermore, metal elements for use in the positive electrode complex film 14 and the negative electrode complex film 17 need not be the same element, and different metal elements can also be used in the complex films of these electrodes.

The principle of the secondary battery 10 according to this example will be explained in detail below with reference to Figs. 3 to 6. Fig. 3 is a schematic view showing a spherical capacitor formed by metal atoms in each complex film. Fig. 4 is an enlarged view of Fig. 3, and shows one metal atom. Fig. 5 is a schematic view for explaining charging/discharging of the secondary battery according to this example. Fig. 6 is a graph showing the energy state of the secondary battery according to this example.

First, the positive electrode complex film 14 and the negative electrode complex film 17 contain a plurality of metal atoms (vanadium). Therefore, when assuming that one metal atom is positioned in the center as shown in Fig. 3, metal atoms adjacent to each other form a micro spherical capacitor. Then, as shown in Fig. 4, electric charge Qs stored in each metal atom is indicated by equation (3) below in accordance with Faraday's formula:

$$Qs = Cp \cdot Ec \tag{3}$$

where Cp is an apparent static capacitance, and Ec is a supply voltage. Also, equation (3) can be rewritten into equation (4) below:

$$Qs = Ce \cdot Eo \tag{4}$$

where Ce is an actual static capacitance, and Eo is an inter-metal-atom voltage in each complex film. In addition, Cp and Ce have a relationship Cp >> Ce, so Eo >> Ec holds. When the inter-metal-atom voltage Eo exceeds a barrier voltage Es, the electric charge Qs is transferred to an adjacent metal atom, and the valance of the metal atom changes. Note that when using vanadium as a metal atom, the barrier voltage Es in the positive electrode 16 is about 0.9 V, and that in the negative electrode 19 is about 0.3 V.

As shown in Fig. 5, therefore, in the positive electrode 16 being charged, the number of metal atoms for which the valence increases by one (i.e., oxidation occurs) gradually increases, and, in the negative electrode 19 being charged, the number of metal atoms for which the valence decreases by one (i.e., reduction occurs) gradually increases. On the other hand, in the positive electrode 16 being discharged, the number of metal atoms for which the valence decreases by one (i.e., reduction occurs) gradually increases, and, in the negative electrode 19 being charged, the number of metal atoms for which the valence increases by one (i.e., oxidation occurs) gradually increases.

In other words, in the positive electrode complex film 14, the average valence of the metal element increases as the secondary battery 10 is charged, and decreases as the secondary battery 10 is discharged. Also, in the negative electrode complex film 17, the average valence of the metal element decreases as the secondary battery 10 is charged, and increases as the secondary battery 10 is discharged.

As described above, in the secondary battery 10 according to this example, an electric current flows due to storage and transfer of the electric charge Qs in each complex film, and the terminal voltage Eo is observed as an electromotive force from the outside (each electrode). When the valences of all metal atoms in each complex film have completely changed, charging or discharging ends.

In the secondary battery 10 using vanadium as a metal atom as in this example, the energy in each state is as

shown in Fig. 6. In this case, a voltage (charging voltage: EC) to be applied between the electrodes during charging must be higher than the barrier voltage Es, and a voltage obtained by adding a barrier voltage EsP of the positive electrode 16 and a barrier voltage EsN of the negative electrode 19 is the electromotive force. For example, the charging voltage EC can be 1.2 times the barrier voltage Es.

More specifically, as shown in Fig. 8, the electromotive force of the secondary battery 10 according to this example is indicated by equation (5) below:

$$\text{Electromotive force: } Eo = EsP + EsN = 0.9\ V + 0.3\ V = 1.2\ V \qquad (5)$$

On the other hand, the charging voltage of the secondary battery 10 according to this example is indicated by equation (6) below:

$$\text{Charging voltage: } EC = 1.2Eo = 1.44\ V \qquad (6)$$

As explained above, the valence of the metal element changes in each complex film of the secondary battery 10 according to this embodiment. In other words, the following reaction occurs in each electrode. Note that this is based on the assumption that "the valence of the metal element changes" is equal to "the oxidation number of the metal element changes".

First, charging of the secondary battery 10 will be explained. Vanadium as the metal element in the negative electrode 19 in the discharging state of the secondary battery 10 is trivalent and has three bonding hands. The first bonding hand of this vanadium bonds to nitrogen, the second bonding hand bonds to hydrogen, and the third bonding hand bonds to carbon. When the secondary battery 10 changes from the discharging state to the charging state, the valence of vanadium in the negative electrode 19 decreases to divalent. Consequently, the bonding hands of vanadium reduce by one, and release hydrogen. An organic compound forming the negative electrode complex film 17 absorbs hydrogen released from vanadium. That is, when the secondary battery 10 is charged, hydrolysis occurs in the negative electrode 19, and this presumably decreases the molecular weight. Note that the organic compound that absorbs hydrogen released from vanadium is PLA (to be described later) as a material of a polymerized L-lactide derivative.

On the other hand, vanadium as the metal element in the positive electrode 16 in the discharging state of the secondary battery 10 is quadrivalent and has four bonding hands. In the charging state of the secondary battery 10, however, vanadium as the metal element in the positive electrode 16 is pentavalent, so the number of bonding hands increases by one, i.e., the number is five. In the charging state of the secondary battery 10 like this, one increased bonding hand of vanadium bonds to extra hydrogen in the form of OH in an organic compound forming the positive electrode complex film 14, and this probably increases the molecular weight. Note that the organic compound containing extra hydrogen in the form of OH is PLA (to be described later) as the material of a polymerized L-lactide derivative.

Next, discharging of the secondary battery 10 will be explained. Vanadium as the metal element in the positive electrode 16 in the charging state of the secondary battery 10 is pentavalent and has five bonding hands. In the discharging state of the secondary battery 10, however, vanadium as the metal element in the positive electrode 16 is quadrivalent, so the number of bonding hands reduces by one, i.e., the number is four. In this case, like the negative electrode 19 in the charging state of the secondary battery 10, hydrogen is released from vanadium, and the organic compound forming the positive electrode complex film 14 absorbs hydrogen. That is, when the secondary battery 10 is discharged, hydrolysis occurs in the positive electrode 16, and this perhaps decreases the molecular weight.

On the other hand, vanadium as the metal element in the negative electrode 19 in the charging state of the secondary battery 10 is divalent and has two bonding hands. In the discharging state of the secondary battery 10, however, vanadium as the metal element in the negative electrode 19 is trivalent, so the number of bonding hands increases by one, i.e., the number is three. In the discharging state of the secondary battery 10 like this, one increased bonding hand of vanadium bonds to extra hydrogen in the form of OH in the organic compound forming the negative electrode complex film 17, and this presumably increases the molecular weight.

From the foregoing, when the secondary battery 10 is charged or discharged, an oxidation or reduction reaction occurs in each electrode, but hydrogen released from the metal element in one electrode does not move to the other electrode but is absorbed in the former electrode. That is, unlike the redox flow battery, hydrogen generated in one electrode does not move to the other electrode in the secondary battery 10 according to this example.

Note that in this example, a polymerized L-lactide derivative forms the positive electrode complex film 14 and the negative electrode complex film 17. As the material of each complex film, however, any organic metal complex can be used as an active substance as long as charging and discharging are possible by the charge storage/transfer action described above.

A method of manufacturing the secondary battery according to this example will be explained in detail below with reference to Figs. 7 and 8. Fig. 7 is a sequence of processes of manufacturing a polymerized L-lactide derivative. Fig. 8 is a sequence of processes of a method of manufacturing the secondary battery according to this example.

First, the positive electrode complex film 14 and the negative electrode complex film 17 are prepared. More specifically, a polymerized L-lactide derivative is prepared by the processes as shown in Fig. 7.

To prepare a polymerized L-lactide derivative, polylactic acid as a raw material is prepared. More specifically, plant-derived sugar (e.g., starch) is hydrated by being mixed with water, and the hydrated sugar is gelatinized by heating. In addition, lactic acid is added by an amount of, e.g., 0.1 to 1.0 wt%, and the resultant material is liquefied by steaming at 110°C to 130°C. The liquefied starch is saccharified into monosaccharide by making a saccharifying enzyme such as amylase act on the liquefied starch. Salt, manganese sulfate, ammonium phosphate, powdered skim milk, soymilk, molasses, a surfactant, and the like are mixed in the saccharified liquid sugar, and fermentation is performed by making plant lactobacillus such as lactobacillus plantarm act on the mixture, thereby obtaining lactic acid. After the fermentation, the generated lactic acid is extracted as lactate by a well-known appropriate prescription, and refined. The refined lactic acid is polycondensed by heating, thereby generating polylactic acid (PLA).

Note that the processes until the generation of polylactic acid are not limited to the above-described processes, and polylactic acid may also be prepared by a well-known manufacturing method. It is also possible to purchase commercially available well-known polylactic acid.

Then, the prepared polylactic acid having a predetermined molecular weight is supplied as a material (PLA material) to a reaction vessel. The molecular weight of this PLA material is preferably 2,000 to 20,000 daltons (Da), and more preferably 5,000 to 10,000 daltons (Da), as a weight average molecular weight. This is so because when using polylactic acid having an average molecular weight falling within this range, it is possible to control the performance of a finally obtained polymerized L-lactide derivative, or satisfy the object of the present invention.

Then, first additives are added to the reaction vessel. The first additives used herein are polyglycolic acid ($(C_2H_2O_2)_n$, n is an integer of 2 or more) and lactide ($C_6H_8O_4$, preferably an L body).

The addition amount of polyglycolic acid is preferably 5 to 10 parts by weight with respect to 100 parts by weight of the PLA material. The addition amount of lactide is preferably 10 to 20 parts by weight with respect to 100 parts by weight of the PLA material.

Lactide generated during the PLA material manufacturing process can directly be used, and it is also possible to obtain lactide by hydrolyzing the PLA material by alkali such as sodium hydroxide or methoxy. Especially when a modified polylactic acid including a lactide structure obtained by hydrolyzing the PLA material by an alkali material such as sodium hydroxide or methoxy and polylactic acid as the residual PLA material coexist, it is possible to efficiently obtain a polymerized L-lactide derivative by ring-opening polymerization of a lactide derivative in a later process. This is favorable because the yield can be increased.

After the PLA material and the first additives are charged in the reaction vessel as described above, the vessel is preferably heated and stirred so as to sufficiently mix the PLA material and the first additives.

Subsequently, a first catalyst is added while heating and stirring the PLA material and the first additives. The first catalyst is preferably a nitrogen-containing metal compound.

As this nitrogen-containing metal compound, it is possible to use a compound or an oxide containing nitrogen in a molecule, of one type or two or more types of elements (metals) selected from the group consisting of vanadium, nickel, iron, aluminum, titanium, cerium, silicon, zirconium, ruthenium, manganese, chromium, cobalt, platinum, thorium, palladium, and tin. Of these compounds, vanadium is favorable as a metal, and ammonium vanadate is preferably used. The addition amount is preferably 0.1 to 10 parts by weight with respect to 100 parts by weight of the PLA (polylactic acid) material.

It is also possible to further add a second catalyst. The second catalyst is preferably a metal compound. The addition amount is preferably 0.1 to 10 parts by weight with respect to 100 parts by weight of the PLA material.

As the metal oxide to be added as needed, it is possible to use an oxide of one type or two or more types of elements (metals) selected from the group consisting of vanadium, nickel, iron, aluminum, titanium, cerium, silicon, zirconium, ruthenium, manganese, chromium, cobalt, platinum, thorium, palladium, and tin. Of these oxides, vanadium is favorable as a metal, and vanadium oxide is preferably used.

Note that this example uses ammonium vanadate as the first additive, and vanadium oxide is used as the second additive. When preparing the positive electrode complex film 14, the valence of vanadium of each additive is quadrivalent. When preparing the negative electrode complex film 17, the valence of vanadium of each additive is trivalent.

After the PLA material and the first additive are charged in the vessel, processes until the addition of the second catalyst are preferably performed at a reduced pressure, e.g., 0.1 to 0.5 atm. As will be described later, however, a post-process is preferably performed under pressurization in some cases. Therefore, the vessel to be used is preferably a sealable vessel that can be depressurized and pressurized.

As described above, in the state in which polylactic acid (PLA) and lactide (preferably L-lactide) coexist, a reaction is caused by adding the nitrogen-containing metal compound (first catalyst) such as ammonium vanadate and

the metal oxide (second catalyst) such as vanadium oxide. Consequently, "O/N substitution" occurs as a substitution reaction between some oxygen in lactide and nitrogen, and N-lactide (L-lactide to which a nitrogen element is introduced) is generated as a lactide derivative.

After the process of adding the second catalyst is performed as described above, a second additive is added to the reaction vessel. This additive used herein is a nitrogen-containing compound, typically amino acid such as serine ($C_3H_7NO_3$). The addition amount of the nitrogen-containing compound is preferably 5 to 10 parts by weight with respect to 100 parts by weight of the PLA material. The reaction caused by charging the second additive as described above generates an L-lactide derivative to which a functional group is added or introduced.

After the second additive is charged in the reaction vessel as described above, an electromagnetic wave is preferably emitted. This is so because emitting an electromagnetic wave to the content improves the efficiency of synthesis of a finally obtained polymerized L-lactide derivative, and increases the yield.

As the condition for emitting an electromagnetic wave, the use of a device capable of emitting a microwave is favorable. When using a microwave, the wavelength is not particularly limited as long as ring-opening polymerization of an L-lactide derivative as an object of the present invention can be performed. An example is the use of a 2.45-GHz electromagnetic wave that is legally suitable when the present invention is applied. The intensity and the emission time of an electromagnetic wave to be used can properly be selected from the range suitable for the object of the present invention.

Then, third additives are added to the reaction vessel while the content of the reaction vessel is heated and stirred. The third additives used herein are hydrocarbon-based alcohol such as dodecyl alcohol, preferably alkyl alcohol, and metal alkylate such as cerium acetate.

The addition amount of hydrocarbon-based alcohol is preferably 0.1 to 1 part by weight with respect to 100 parts by weight of the PLA material. The addition amount of metal alkylate is preferably 0.1 to 1 part by weight with respect to 100 parts by weight of the PLA material.

After the third additives are charged in the reaction vessel, heating and stirring are preferably performed.

After the nitrogen-containing compound is added and an electromagnetic wave is emitted as described above, processes until the third additives are added and heating and stirring are performed are preferably performed under pressurization, e.g., at a pressure of 1 (exclusive) to 5 (inclusive) atm.

After that, the reaction vessel is preferably left to stand and heated at a reduced pressure, e.g., 0.1 to 0.5 atm. Thus, the reaction can be terminated.

After the reaction is terminated, the content is discharged from the reaction vessel. In this process, a polymerized L-lactide derivative can be obtained by, e.g., pushing out the content from the reaction vessel under pressurization, e.g., at 2 to 3 atm. Note that the processes from the preparation of polylactic acid as a raw material to the acquisition of the polymerized L-lactide derivative will be referred to as complex preparation (Fig. 7: step S1).

Note that in this complex preparation, in order to implement the operation of the secondary battery 10 described above, a metal element is so selected that the average valence of a metal element in the positive electrode complex film 14 increases as the secondary battery 10 is charged, and decreases as the secondary battery 10 is discharged. Also, a metal element is so selected that the average valence of a metal element in the negative electrode complex film 17 decreases as the secondary battery 10 is charged, and increases as the secondary battery 10 is discharged.

After that, various materials such as a resin and an anti-oxidizer are mixed in the polymerized L-lactide derivative, and a complex film is formed. In this example as described above, the valence of vanadium is changed by adjusting the first and second catalysts, so the positive electrode complex film 14 is made of an organic metal complex in which vanadium is quadrivalent, and the negative electrode complex film 17 is made of an organic metal complex in which vanadium is trivalent. Note that the process of forming the positive electrode complex film 14 and the negative electrode complex film 17 from the polymerized L-lactide derivative will be referred to as a film formation process or a complex membrane formation process (Fig. 8: step S2).

Then, the positive electrode complex film 14 is adhered on the positive electrode current collector 15 made of a copper plate. Subsequently, the negative electrode complex film 17 is adhered on the negative electrode current collector 18 made of an aluminum plate. In other words, the positive electrode complex film 14 (a positive electrode complex membrane) made of a positive electrode organic metal complex is laminated on the positive electrode current collector 15, and the negative electrode complex film 17 (a negative electrode complex membrane) made of a negative electrode organic metal complex is laminated on the negative electrode current collector 18. This process of adhering the complex film on the current collector will be referred to as a lamination process (Fig. 7: step S3).

Note that the polymerized L-lactide derivative obtained in the complex preparation process need not be formed into a film, and may also be applied directly on the positive electrode current collector 15 and the negative electrode current collector 18. It is also possible to mix another resin material or the like in the polymerized L-lactide derivative, and apply the mixture on the positive electrode current collector 15 and the negative electrode current collector 18. That is, it is also possible to perform a lamination process of laminating a positive electrode complex membrane and a negative electrode complex membrane made of a polymerized L-lactide derivative on the positive electrode current collector 15

and the negative electrode current collector 18.

After that, the separator 21 is sandwiched between the positive electrode current collector 15 on which the positive electrode complex film 14 is adhered and the negative electrode current collector 18 on which the negative electrode complex film 17 is adhered, and heat pressure welding is performed (a heat pressure welding process: step S4 in Fig. 7). That is, a heat pressure welding process is performed by placing the separator 21 between the positive electrode complex film 14 and the negative electrode complex film 17, thereby pressure-bonding these members.

After the heat pressure welding, the pressure-bonded laminated material is cut and shaped into predetermined dimensions. Then, in the state in which the material is cut and shaped into the predetermined dimensions, the positive electrode lead line 12 is attached to the positive electrode current collector 15, and the negative electrode lead line 13 is attached to the negative electrode current collector 18. Subsequently, the positive electrode 16, the negative electrode 19, and the separator 21 are covered with a prepared bag-like insulating film 11 so as to expose only parts of the positive electrode lead line 12 and the negative electrode lead line 13. That is, the positive electrode 16, the negative electrode 19, and the separator 21 are enclosed in the bag-like insulating film 11. After that, a heat-sealing device is used to perform low-pressure sealing on the opening of the bag-like insulating film 11, thereby sealing the secondary battery 10 (a sealing process: step S5 in Fig. 8).

Assembly of the secondary battery 10 according to this example is complete through the manufacturing processes described above. After assembly of the secondary battery 10 as described above is complete, an aging process (Fig. 8: step S6) of activating the positive electrode complex film 14 and the negative electrode complex film 17 by repeating charging and discharging is performed. For example, charging and discharging including low-current charging, low-current discharging, medium-current charging, medium-current discharging, high-current charging, and high-current discharging as one cycle are repeated three times, and low-current full charging is finally performed. For the low current, the medium current, and the high current, current amounts in one cycle are relatively determined, and practical numerical values are appropriately determined in accordance with the dimensions and required characteristics of the secondary battery 10 to be manufactured. In the secondary battery 10 according to this example, charging and discharging are performed by oxidation-reduction reactions in the positive electrode complex film 14 and the negative electrode complex film 17. Accordingly, the aging process like this is necessary before the secondary battery 10 is generally used. This aging process can be performed by the purchaser of the secondary battery 10, and can also be performed as a part of the manufacturing process of the secondary battery 10.

As described above, the secondary battery 10 according to this example enables charging and discharging by the electric charge storage/transfer action of each complex film functioning as an active substance, and functions as a chargeable/dischargeable battery without any electrolyte. In addition, the secondary battery 10 requires neither a tank nor a pump, unlike the redox flow battery. Accordingly, the secondary battery 10 according to this example can easily be miniaturized, and hence can easily be carried. Since a large capacity can easily be obtained by connecting a plurality of secondary batteries 10, the secondary batteries 10 can semi-permanently be used for leveling of power demand fluctuations and equalization of natural energy power generation, and as a backup power supply at the time of power failure. Even when a large capacity like this is implemented, the size of one secondary battery 10 is small, so the size of the large-capacity combined battery can easily be decreased.

Also, the polymerized L-lactide derivative used in the secondary battery 10 according to this example achieves superior functions like those of plastic, and is a material having flame retardancy and containing no toxic substance. This gives the secondary battery 10 high safeness including flame retardancy and capable of reducing toxic substances. Furthermore, since the raw material of the polymerized L-lactide derivative is starch, the secondary battery 10 can also reduce the cost when compared to other existing secondary batteries.

A charge/discharge test was conducted on the secondary battery 10 according to this example and a generally commercially available lithium secondary battery (comparative example), and the characteristics of the two batteries were compared. The evaluation results are shown in Table 1 below, and the characteristics of the secondary battery 10 according to this example will be explained. Note that as the two batteries to be compared, batteries having equivalent maximum output voltages (3.6 or 3.7 V) were prepared.

Table 1: Comparison table of secondary battery according to example and lithium-ion secondary battery according to comparative example

| Item | Example | Comparative example |
|---|---|---|
| Voltage | 3.6 V by 3 cells | 3.7 V |
| Charge/discharge efficiency | 90% or more | 80 - 90% |
| Weight energy density | 300 - 400 W/Kg | 350 - 500 W/Kg |

(continued)

| Item | Example | Comparative example |
|---|---|---|
| Volume energy density | 300 - 400 W/Kg | 250 - 360 Wh/L |
| Durability cycle | 4,200 times | 1,200 times |
| Memory effect | None | Little |
| Self-discharge rate | About 0.1% | About 7% |
| Charging speed | Very high | High |
| Use conditions | Storage temperature: 0 - 115°C Operation temperature: 0 - 90°C | Storage temperature: room temperature - 60°C Operation temperature: 0 - 40°C |
| Drawbacks | No particular drawback | •Failure by overcharge/overdi scharge •Toxic liquid oozes in failure |
| | | •Heating and combustion occur |

As described above, the secondary battery 10 according to this example has the charge/discharge efficiency higher than that of the lithium-ion secondary battery, has the durability cycle 3.5 times that of the lithium-ion secondary battery, and has no memory effect. That is, the secondary battery 10 according to this example improves in deterioration characteristics when in use, compared to the lithium-ion secondary battery.

Also, when compared to the lithium-ion secondary battery, the secondary battery 10 according to this example has a low self-discharge rate and a high charging speed. In particular, the self-discharge rate of the secondary battery 10 according to this example is about 0.1%. This reveals that the secondary battery 10 is also suitable for long-term storage and long-term use.

Furthermore, compared to the lithium-ion secondary battery, the secondary battery 10 according to this example has a wide storage temperature range and a wide operation temperature range, and hence can be used in various environments. In particular, the secondary battery 10 can be used in environments at relatively high temperatures, and therefore can be installed near, e.g., solar panels on the roof or the like.

In addition, the secondary battery 10 according to this example causes no failure by overcharge/overdischarge, causes no oozing of a toxic liquid in failure, and causes neither heating nor combustion.

<Modes of Present Invention>

To achieve the above-described object, a secondary battery according to the first mode of the present invention is a secondary battery to be used by repeating charging and discharging, comprising: a positive electrode having a structure in which a positive electrode complex film, which is made of a positive electrode organic metal complex including a structure in which a metal element having a plurality of valences is bonded to an organic compound, is laminated on a positive electrode current collector; a negative electrode having a structure in which a negative electrode complex film, which is made of a negative electrode organic metal complex including a structure in which a metal element having a plurality of valences is bonded to an organic compound, is laminated on a negative electrode current collector; a separator that electrically separates the positive electrode and the negative electrode; and a package member that seals the positive electrode, the negative electrode, and the separator while partially exposing the positive electrode and the negative electrode, wherein in the positive electrode complex film, an average valence of the metal element increases as the secondary battery is charged, and decreases as the secondary battery is discharged, and in the negative electrode complex film, an average valence of the metal element decreases as the secondary battery is charged, and increases as the secondary battery is discharged.

In the secondary battery according to the first mode of the present invention, the positive electrode complex film and the negative electrode complex film function as active substances, and charging and discharging can be performed by the charge storage/transfer action in the positive electrode complex film and the negative electrode complex film. Accordingly, this secondary battery functions as a battery that can be charged and discharged without any electrolyte. Also, the secondary battery according to the first mode of the present invention requires neither a tank nor a pump, unlike the redox flow battery. Therefore, this secondary battery can easily be downsized and hence can easily be carried. Furthermore, a large capacity can easily be obtained by connecting a plurality of secondary batteries. This makes it possible to semi-permanently use the secondary batteries for leveling of power demand fluctuations and equalization of natural energy power generation, and as a backup power supply at the time of power failure. In addition, even when

a large capacity like this is implemented, the size of one secondary battery is small, so the size of the large-capacity combined battery can also easily be decreased.

In a secondary battery according to the second mode of the present invention, the positive electrode organic metal complex and the negative electrode organic metal complex are made of a polymerized L-lactide derivative, and a valence of the metal element in the positive electrode complex film and that of the metal element in the negative electrode complex film are different, in the abovementioned first mode. The polymerized L-lactide achieves superior functions like those of plastic, and is a material having flame retardancy and containing no toxic substance. This gives the secondary battery according to the second mode high safeness including flame retardancy and capable of reducing toxic substances. In addition, since the raw material of the polymerized L-lactide derivative is starch, the secondary battery according to the second mode can also reduce the cost when compared to other existing secondary batteries.

In a secondary battery according to the third mode of the present invention, the positive electrode organic metal complex and the negative electrode organic metal complex contain one or a plurality of elements selected from the group consisting of vanadium, nickel, iron, aluminum, titanium, cerium, silicon, zircon (zirconium), ruthenium, manganese, chromium, cobalt, platinum, thorium, palladium, and tin, in the abovementioned first or second mode. Since these metal elements have a plurality of valences, they are favorable as materials for forming an organic metal complex by bonding to an organic compound.

In a secondary battery according to the fourth mode of the present invention, the positive electrode organic metal complex and the negative electrode organic metal complex contain different metals, in the abovementioned third mode. By thus selecting metals, choices of the materials of the positive electrode organic metal complex and the negative electrode organic metal complex increase. This makes it possible to reduce the cost of the secondary battery while satisfying various specifications and requirements of the secondary battery.

In a secondary battery according to the fifth mode of the present invention, the positive electrode organic metal complex and the negative electrode organic metal complex have chemical formula (7) below as a constituent unit, in any one of the first to fourth mode:

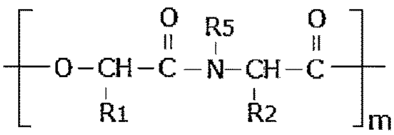 (7)

(in chemical formula (7) above, R1 and R2 are structures containing a metal element and can be the same or different, R5 is a structure containing a metal element, and m indicates the number of repetitions.)

In a secondary battery according to the sixth mode of the present invention, the positive electrode organic metal complex and the negative electrode organic metal complex have chemical formula (8) below as a constituent unit, in any one of the first to fourth mode:

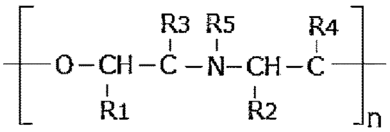 (8)

(in chemical formula (8) above, R1 to R4 are structures containing a metal element and can be the same or different, R5 is a structure containing a metal element, and n indicates the number of repetitions.)

These constituent units of the organic metal complexes achieve superior functions like those of plastic, and contain no toxic substance while having flame retardancy. This gives the secondary batteries according to the fifth and sixth modes high safeness including flame retardancy and capable of reducing toxic substances. In addition, since the raw material of each organic metal complex is starch, the secondary batteries according to the fifth and sixth modes can also reduce the cost when compared to other existing secondary batteries.

To achieve the above-described object, a secondary battery manufacturing method according to the seventh mode of the present invention is a method of manufacturing a secondary battery to be used by repeating charging and discharging, comprising: preparing a positive electrode organic metal complex and a negative electrode organic metal complex each including a structure in which a metal element having a plurality of valences is bonded to an organic compound; laminating a positive electrode complex film made of the positive electrode organic metal complex on a positive electrode current collector, and laminating a negative electrode complex film made of the negative electrode organic metal complex on a negative electrode current collector; placing a separator between the positive electrode current collector on which the positive electrode complex film is laminated and the negative electrode current collector

on which the negative electrode complex film is laminated, and performing heat pressure welding; and sealing the positive electrode current collector and the negative electrode current collector that are pressure-bonded via the separator, by using a package member, wherein in the preparing, the metal element is selected such that an average valence of the metal element in the positive electrode complex film increases as the secondary battery is charged, and decreases as the secondary battery is discharged, and the metal element is selected such that an average valence of the metal element in the negative electrode complex film decreases as the secondary battery is charged, and increases as the secondary battery is discharged.

In the secondary battery manufactured by the manufacturing method according to the seventh mode of the present invention, the positive electrode complex film and the negative electrode complex film function as active substances, and charging and discharging can be performed by the charge storage/transfer action in the positive electrode complex film and the negative electrode complex film. Accordingly, this secondary battery functions as a battery that can be charged and discharged without any electrolyte. Also, the secondary battery according to the seventh mode of the present invention requires neither a tank nor a pump, unlike the redox flow battery. Therefore, this secondary battery can easily be downsized and hence can easily be carried. Furthermore, a large capacity can easily be obtained by connecting a plurality of secondary batteries. This makes it possible to semi-permanently use the secondary batteries for leveling of power demand fluctuations and equalization of natural energy power generation, and as a backup power supply at the time of power failure. In addition, even when a large capacity like this is implemented, the size of one secondary battery is small, so the size of the large-capacity combined battery can also easily be decreased.

In a secondary battery manufacturing method according to the eighth mode of the present invention, the positive electrode organic metal complex and the negative electrode organic metal complex are made of a polymerized L-lactide derivative, and a valence of the metal element in the positive electrode complex film and that of the metal element in the negative electrode complex film are different, in the abovementioned seventh mode. The polymerized L-lactide derivative achieves superior functions like those of plastic, and is a material having flame retardancy and containing no toxic substance. This gives the secondary battery manufactured by the manufacturing method according to the eighth mode high safeness including flame retardancy and capable of reducing toxic substances. In addition, since the raw material of the polymerized L-lactide derivative is starch, the secondary battery manufactured by the manufacturing method according to the eighth mode can also reduce the cost when compared to other existing secondary batteries.

In a secondary battery manufacturing method according to the ninth mode of the present invention, the positive electrode organic metal complex and the negative electrode organic metal complex contain one or a plurality of elements selected from the group consisting of vanadium, nickel, iron, aluminum, titanium, cerium, silicon, zircon (zirconium), ruthenium, manganese, chromium, cobalt, platinum, thorium, palladium, and tin, in the abovementioned seventh or eighth mode. Since these metal elements have a plurality of valences, they are favorable as materials for forming an organic metal complex by bonding to an organic compound.

In a secondary battery manufacturing method according to the 10th mode of the present invention, the positive electrode organic metal complex and the negative electrode organic metal complex contain different metals, in the abovementioned ninth mode. By thus selecting metals, choices of the materials of the positive electrode organic metal complex and the negative electrode organic metal complex increase. This makes it possible to reduce the cost of the secondary battery while satisfying various specifications and requirements of the secondary battery.

REFERENCE SIGNS LIST

10: secondary battery
11: insulating film (package member)
12: positive electrode lead line
13: negative electrode lead line
14: positive electrode complex film (positive electrode complex membrane)
15: positive electrode current collector
16: positive electrode
17: negative electrode complex film (negative electrode complex membrane)
18: negative electrode current collector
19: negative electrode
21: separator
22: battery internal structure

**Claims**

1. A secondary battery to be used by repeating charging and discharging, comprising:

   a positive electrode having a structure in which a positive electrode complex film, which is made of a positive electrode organic metal complex including a structure in which a metal element having a plurality of valences is bonded to an organic compound, is laminated on a positive electrode current collector;
   a negative electrode having a structure in which a negative electrode complex film, which is made of a negative electrode organic metal complex including a structure in which a metal element having a plurality of valences is bonded to an organic compound, is laminated on a negative electrode current collector;
   a separator that electrically separates the positive electrode and the negative electrode; and
   a package member that seals the positive electrode, the negative electrode, and the separator while partially exposing the positive electrode and the negative electrode,
   wherein in the positive electrode complex film, an average valence of the metal element increases as the secondary battery is charged, and decreases as the secondary battery is discharged, and
   in the negative electrode complex film, an average valence of the metal element decreases as the secondary battery is charged, and increases as the secondary battery is discharged.

2. The secondary battery according to claim 1, wherein
   the positive electrode organic metal complex and the negative electrode organic metal complex are made of a polymerized L-lactide derivative, and
   a valence of the metal element in the positive electrode complex film and that of the metal element in the negative electrode complex film are different.

3. The secondary battery according to claim 1 or 2, wherein the positive electrode organic metal complex and the negative electrode organic metal complex contain one or a plurality of elements selected from the group consisting of vanadium, nickel, iron, aluminum, titanium, cerium, silicon, zircon (zirconium), ruthenium, manganese, chromium, cobalt, platinum, thorium, palladium, and tin.

4. The secondary battery according to claim 3, wherein the positive electrode organic metal complex and the negative electrode organic metal complex contain different metals.

5. The secondary battery according to any one of claims 1 to 4, wherein the positive electrode organic metal complex and the negative electrode organic metal complex have chemical formula (1) below as a constituent unit:

   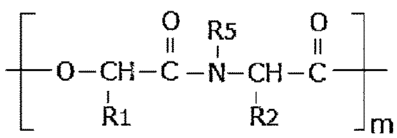 (1)

   (in chemical formula (1) above, R1 and R2 are structures containing a metal element and can be the same or different, R5 is a structure containing a metal element, and m indicates the number of repetitions.)

6. The secondary battery according to any one of claims 1 to 4, wherein the positive electrode organic metal complex and the negative electrode organic metal complex have chemical formula (2) below as a constituent unit:

   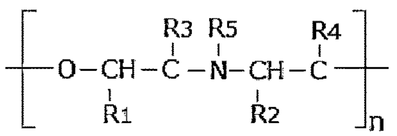 (2)

   (in chemical formula (2) above, R1 to R4 are structures containing a metal element and can be the same or different, R5 is a structure containing a metal element, and n indicates the number of repetitions.)

7. A method of manufacturing a secondary battery to be used by repeating charging and discharging, comprising:

preparing a positive electrode organic metal complex and a negative electrode organic metal complex each including a structure in which a metal element having a plurality of valences is bonded to an organic compound;
laminating a positive electrode complex film made of the positive electrode organic metal complex on a positive electrode current collector, and laminating a negative electrode complex film made of the negative electrode organic metal complex on a negative electrode current collector;
placing a separator between the positive electrode current collector on which the positive electrode complex film is laminated and the negative electrode current collector on which the negative electrode complex film is laminated, and performing heat pressure welding; and
sealing the positive electrode current collector and the negative electrode current collector that are pressure-bonded via the separator, by using a package member,
wherein in the preparing, the metal element is selected such that an average valence of the metal element in the positive electrode complex film increases as the secondary battery is charged, and decreases as the secondary battery is discharged, and the metal element is selected such that an average valence of the metal element in the negative electrode complex film decreases as the secondary battery is charged, and increases as the secondary battery is discharged.

**8.** The method of manufacturing a secondary battery according to claim 7, wherein
the positive electrode organic metal complex and the negative electrode organic metal complex are made of a polymerized L-lactide derivative, and
a valence of the metal element in the positive electrode complex film and that of the metal element in the negative electrode complex film are different.

**9.** The method of manufacturing a secondary battery according to claim 7 or 8, wherein the positive electrode organic metal complex and the negative electrode organic metal complex contain one or a plurality of elements selected from the group consisting of vanadium, nickel, iron, aluminum, titanium, cerium, silicon, zircon (zirconium), ruthenium, manganese, chromium, cobalt, platinum, thorium, palladium, and tin.

**10.** The method of manufacturing a secondary battery according to claim 9, wherein the positive electrode organic metal complex and the negative electrode organic metal complex contain different metals.

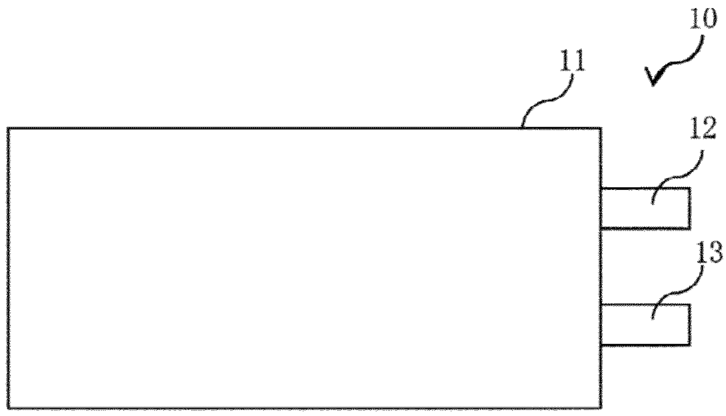


FIG. 1

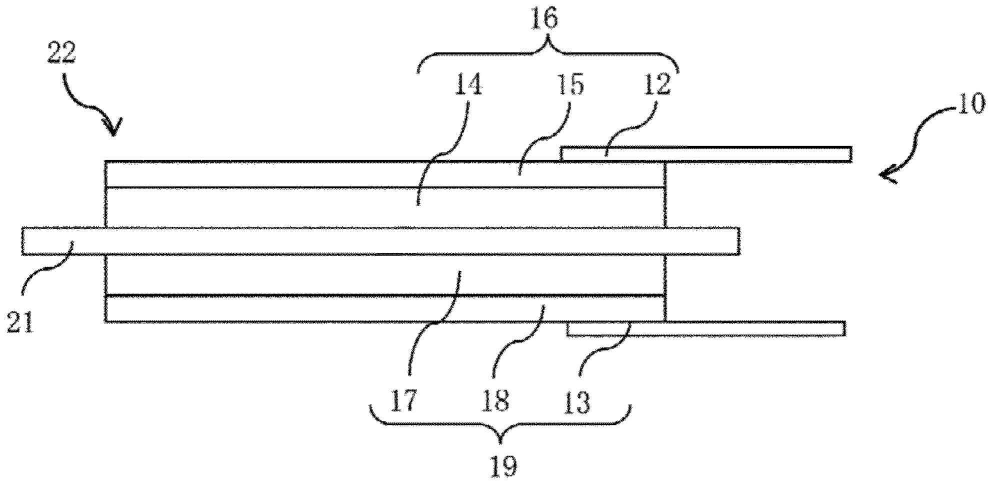


F I G. 2

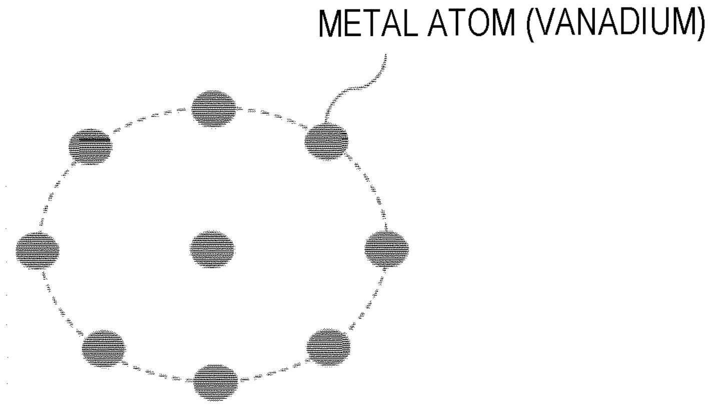


F I G. 3

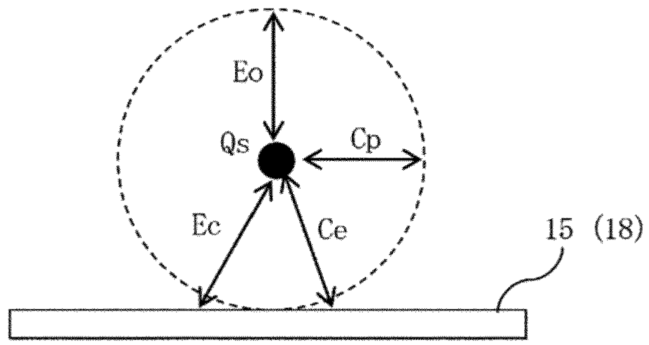


FIG. 4

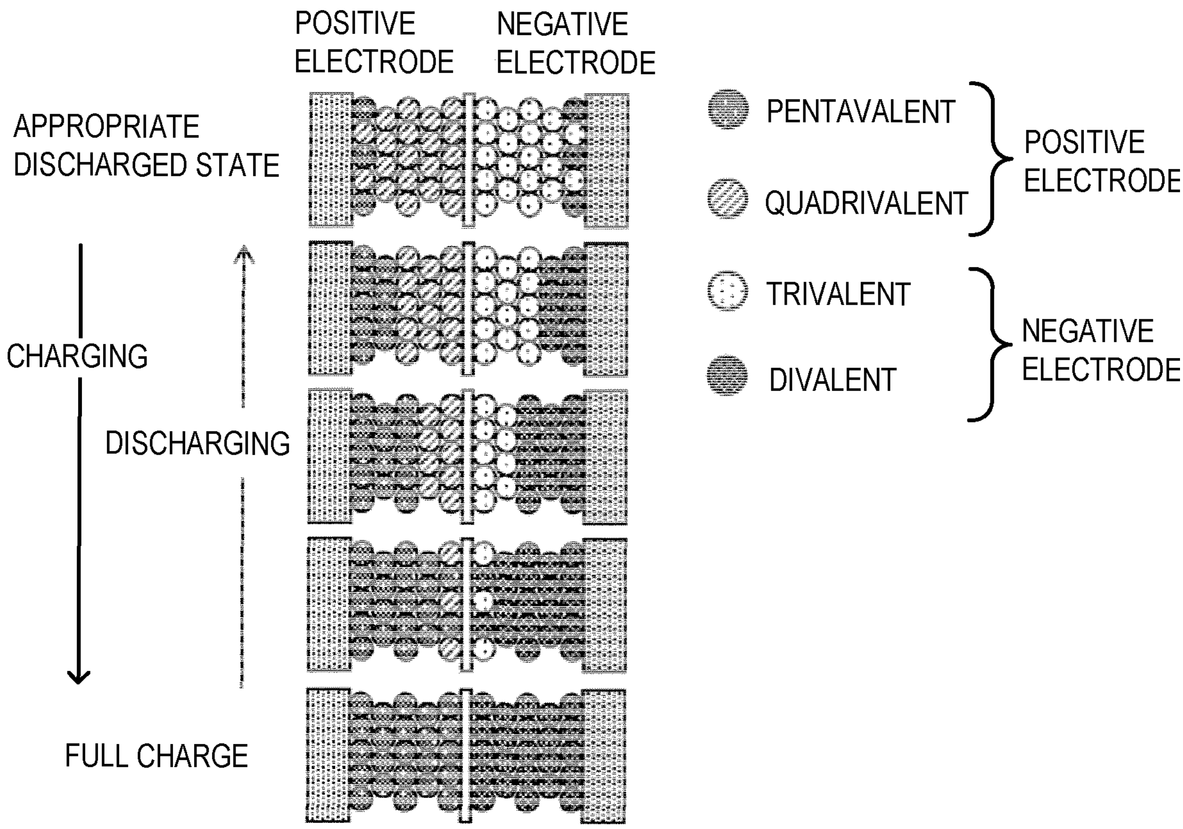
POSITIVE ELECTRODE
NEGATIVE ELECTRODE
APPROPRIATE DISCHARGED STATE
CHARGING
DISCHARGING
FULL CHARGE
PENTAVALENT
QUADRIVALENT
POSITIVE ELECTRODE
TRIVALENT
DIVALENT
NEGATIVE ELECTRODE

FIG. 5

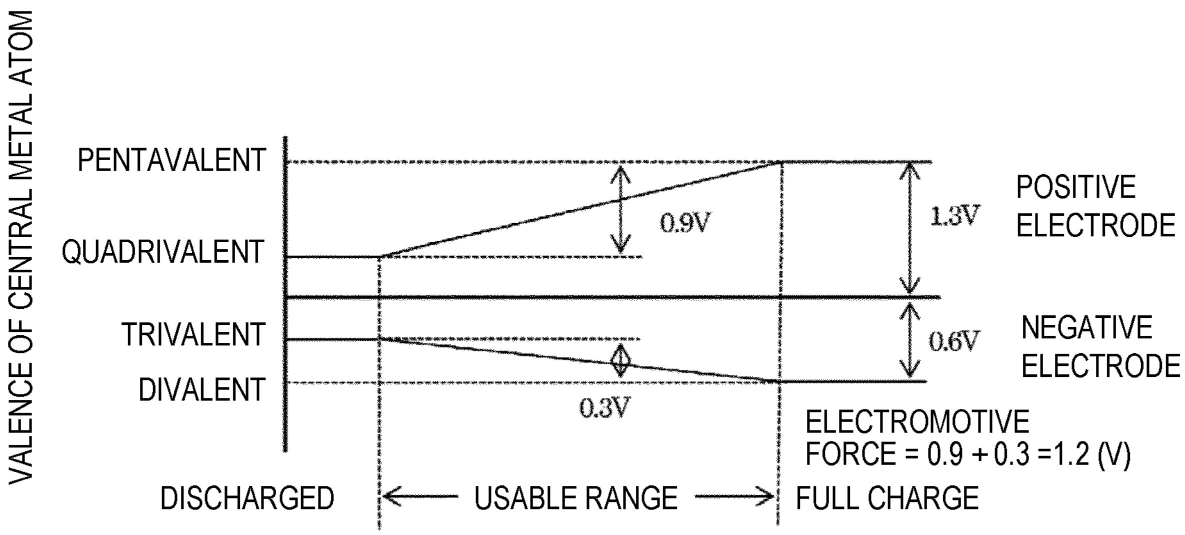
VALENCE OF CENTRAL METAL ATOM
PENTAVALENT
QUADRIVALENT
TRIVALENT
DIVALENT
0.9V
1.3V
POSITIVE ELECTRODE
0.6V
NEGATIVE ELECTRODE
0.3V
ELECTROMOTIVE FORCE = 0.9 + 0.3 =1.2 (V)
DISCHARGED
USABLE RANGE
FULL CHARGE

F I G. 6

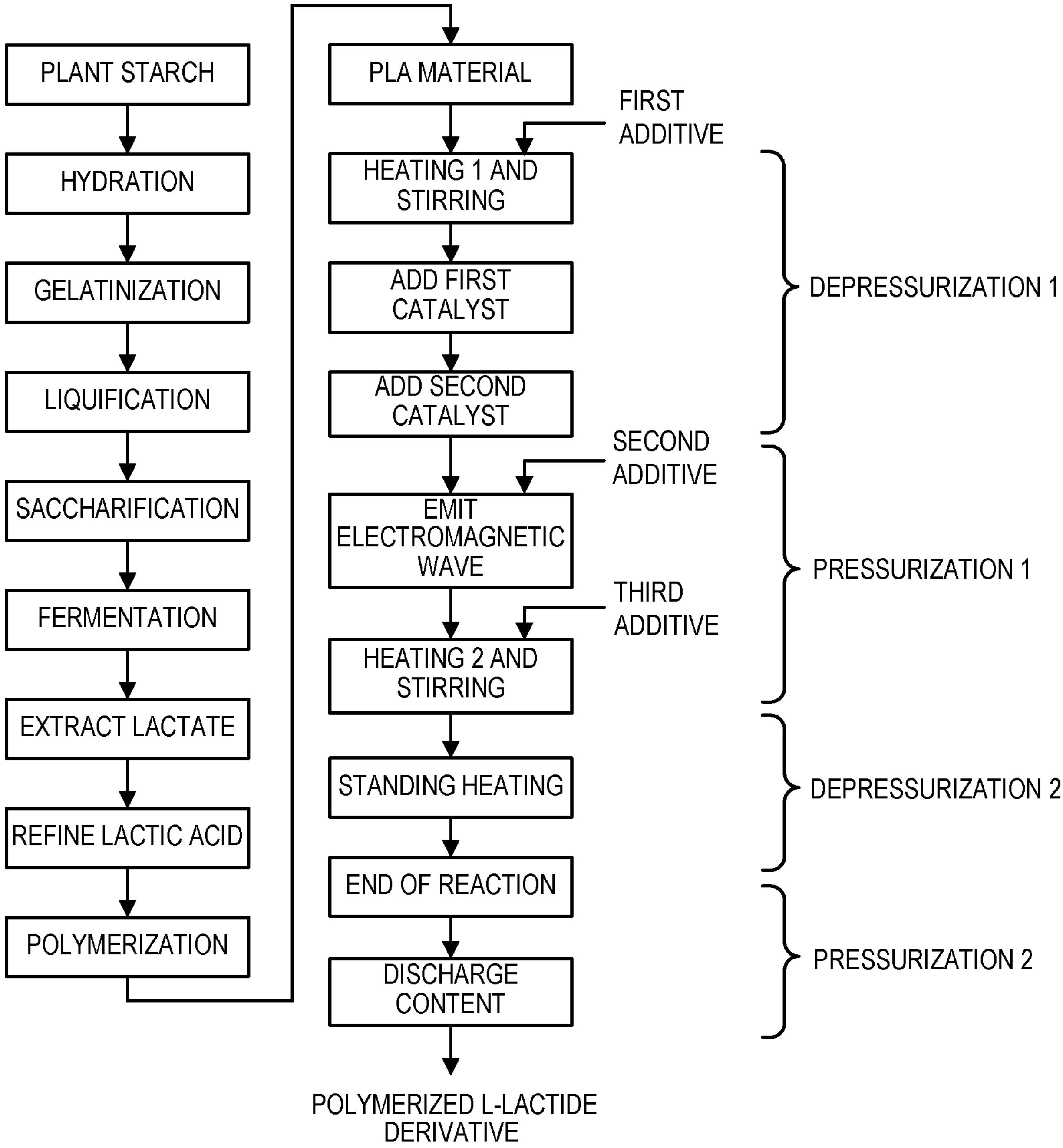
PLANT STARCH
HYDRATION
GELATINIZATION
LIQUIFICATION
SACCHARIFICATION
FERMENTATION
EXTRACT LACTATE
REFINE LACTIC ACID
POLYMERIZATION
PLA MATERIAL
FIRST ADDITIVE
HEATING 1 AND STIRRING
ADD FIRST CATALYST
ADD SECOND CATALYST
DEPRESSURIZATION 1
SECOND ADDITIVE
EMIT ELECTROMAGNETIC WAVE
THIRD ADDITIVE
HEATING 2 AND STIRRING
PRESSURIZATION 1
STANDING HEATING
DEPRESSURIZATION 2
END OF REACTION
DISCHARGE CONTENT
PRESSURIZATION 2
POLYMERIZED L-LACTIDE DERIVATIVE

FIG. 7

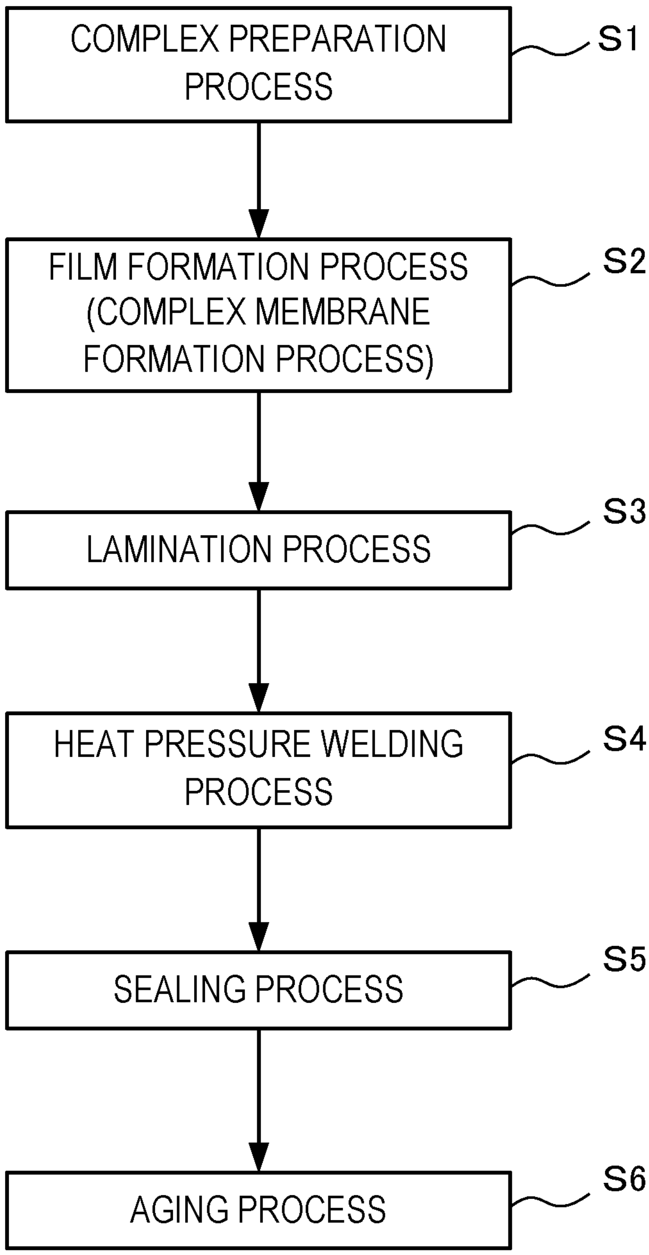
COMPLEX PREPARATION PROCESS
S1
FILM FORMATION PROCESS (COMPLEX MEMBRANE FORMATION PROCESS)
S2
LAMINATION PROCESS
S3
HEAT PRESSURE WELDING PROCESS
S4
SEALING PROCESS
S5
AGING PROCESS
S6

F I G. 8

## INTERNATIONAL SEARCH REPORT

International application No.
PCT/JP2017/024542

A. CLASSIFICATION OF SUBJECT MATTER
*H01M10/36*(2010.01)i, *H01M4/60*(2006.01)i, *H01M10/38*(2006.01)i

According to International Patent Classification (IPC) or to both national classification and IPC

B. FIELDS SEARCHED

Minimum documentation searched (classification system followed by classification symbols)
H01M10/00, H01M4/60, H01M8/00, H01G11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2014-17267 A (Tohoku University), 30 January 2014 (30.01.2014), entire text & US 2012/0301787 A1 whole documents & WO 2011/049103 A1 & EP 2493002 A1 & CN 102668224 A & KR 10-2012-0091177 A | 1-10 |
| A | JP 2008-546210 A (Nippon Chemi-Con Corp.), 18 December 2008 (18.12.2008), entire text & US 2009/0026085 A1 whole documents & WO 2006/131992 A1 & EP 1889270 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 September 2017 (20.09.17) | 03 October 2017 (03.10.17) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.
PCT/JP2017/024542

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-118320 A (Denso Corp.), 27 May 2010 (27.05.2010), entire text (Family: none) | 1-10 |
| A | JP 2006-501668 A (Gen3 Partners, Inc.), 12 January 2006 (12.01.2006), entire text & US 2005/0225928 A1 whole documents & WO 2004/032162 A1 & EP 1547105 A | 1-10 |
| A | JP 2010-113892 A (University of Tsukuba), 20 May 2010 (20.05.2010), entire text (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007305501 A